# EUROPEAN PATENT SPECIFICATION

(11) **EP 1 000 736 B1**
(45) Date of publication and mention of the grant of the patent: **23.08.2006**
(21) Application number: 99660175.3
(22) Date of filing: 04.11.1999
(51) Int. Cl.: B32B 27/00, B32B 27/12

(54) **Packaging material**
Verpackungsmaterial
Matériau d'emballage

(30) Priority: 09.11.1998 FI 982429
(43) Date of publication of application: 17.05.2000
(73) Proprietor: Suominen Nonwovens Ltd., 29250 Nakkila (FI)
(72) Inventor: Huldén, Margareta, 29270 Hormisto (FI); Vapola, Risto, 00180 Helsinki (FI); Ojanen, Marja, 33960 Pirkkala (FI); Saikkonen, Marjo, 28100 Pori (FI)
(74) Representative: Langenskiöld, Tord Karl Walter

(56) References cited:
- EP-A- 0 433 060
- EP-A- 0 982 431
- WO-A-96/19383
- WO-A-96/40513
- US-A- 5 741 564

## Description

The present invention relates to the use of a material of a nonwoven fabric coated with a plastic film are a packaging material.

Uses of the packaging material according to the invention include *e.g.* diapers, sanitary towels, pantyliners, adult incontinence pads, toilet paper, kitchen towels, clothes, textiles, handkerchiefs, cotton wool, wound care products, various bandage kits, single packages of sanitary towels, and other packages of products perceived to be soft.

For packaging the above products, as well as other products, articles and materials, it is typical to use a packaging material made of paperboard, cardboard, or plastic. The known packages of these products are typically cardboard boxes or plastic bags made of the packaging material.

WO 97/12572 discloses a packaging material for a sanitary napkin which is characterized in that the packaging material presents a relatively small surface area for contact with the outer adhesive surface of the sanitary napkin. WO 96/19383 discloses a steam-sterilizable flexible pouch package comprising at least three different web layers one of which is an effective barrier against the passage of bacteria. EP 433 060 discloses an improved sheet material which comprises a nonwoven plastics film and a barrier film; the sheet material is especially useful for the production of ostomy bags. EP 982 431 discloses a nonwoven with porons extrusion-coating.

However, due to the technical properties of their material, said packaging materials do not support the image formed for example in a consumer of the soft feel of the product inside the package, particularly when the package contains above-mentioned products. Products to be mentioned in particular include single packages of sanitary towels, in which a particular problem is also the rustling sound caused by handling plastic packages of prior art, due to the material, which is found annoying and in some cases also too conspicuous. On the other hand, the package material must still have suitable properties and be sufficiently strong for the different steps of manufacturing, packaging and handling of the package. In addition, it must normally be possible to print a colour, a pattern and/or text on the package *e.g.* for the consumer. Furthermore, the package material must provide a sufficient protection for the product packed therein, *e.g.* against conditions of the environment or mechanical impacts.

It is an aim of the present invention to present a use of a packaging material to eliminate the above-mentioned drawbacks of packaging materials of prior art. For achieving this aim, a packaging material is used for packaging, which is primarily characterized in that the material is made of at least one non-woven fabric and at least one plastic film which are attached to each other on their interface,

The sandwich structure of the packaging material also gives it special properties, depending on the different layers, which can be utilized; for example, the strength properties of the material in different directions can be influenced by the direction (*e.g.* parallel, cross or random) of the fibres in the non-woven fabric.

Furthermore, the packaging material based on a non-woven fabric gives the package a soft and comfortable feel, based on perception particularly by touching. Thus, the package can be used to back up the image of the soft and airy product therein, particularly by placing the fibre material on the outer surface of the package. A considerable advantage is the noiselessness of the package material and the packages made thereof. Another particular advantage of the packages is the fact that they are opened In the packaging machine better than conventional packages made of plastic.

In the following, the invention will be described in more detail with reference to the appended drawings, in which:
- Fig. 1: shows an advantageous structure of the packaging material according to the invention in a cross-section,
- Fig. 2: shows a bag made of the packaging material according to the invention, to be used for packaging, in a side view,
- Fig. 3: shows a thermal bonding device used for the manufacture of the packaging material according to the invention, in a principle view, and
- Fig. 4: shows an extrusion coating device used for the manufacture of the packaging material according to the invention, in a principle view.

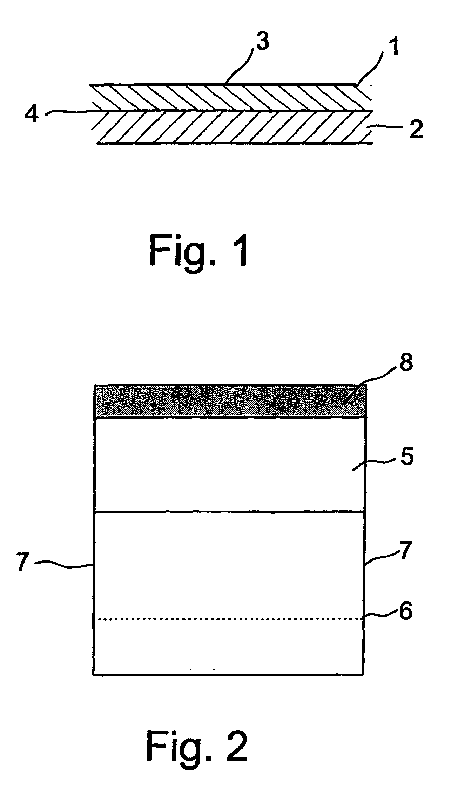

Figure 1 shows the structure of an advantageous embodiment of the packaging material to be used according to the invention. The packaging material comprises a plastic coating 1, a non-woven fabric 2, a surface treatment of the plastic coating with a silicone-based substance 3, and an interface 4 of the plastic layer and the non-woven fabric layer.

Figure 2 shows a product bag of the packaging material according to an advantageous embodiment, which is made of a packaging material sheet with a fixed size and a rectangular shape. The sheet is double-folded so that part of the sheet is left unfolded and this part forms a closing flap 5 for the package. In the area of the bottom of the product bag, the packaging material sheet is four-ply, wherein a fold 6 is formed to make it possible to open the product bag better. The product bag is provided with a side seam 7 for example by the application of heat, which fixes the product bag in its final shape. At the edge of the closing flap 5 there is a closing area 8 which can be *e.g.* an adhesive tape or another means suitable for closing the package. The outer surface of the bag is the non-woven fabric side. The non-woven fabric side as the outer surface gives a soft feel to the package. The non-woven fabric side can be printed.

The non-woven fabric 2 is made by a method known *per se* by supplying fibres through carding cylinders covered with a saw tooth metallic wire, wherein the rolling cylinders convey the fibres forward, separate them from each other and make them parallel with respect to the direction of travel. The rate of feeding the fibres can be used to affect the grammage of the developing non-woven fabric, in this case it is preferably approximately 20 g/m².

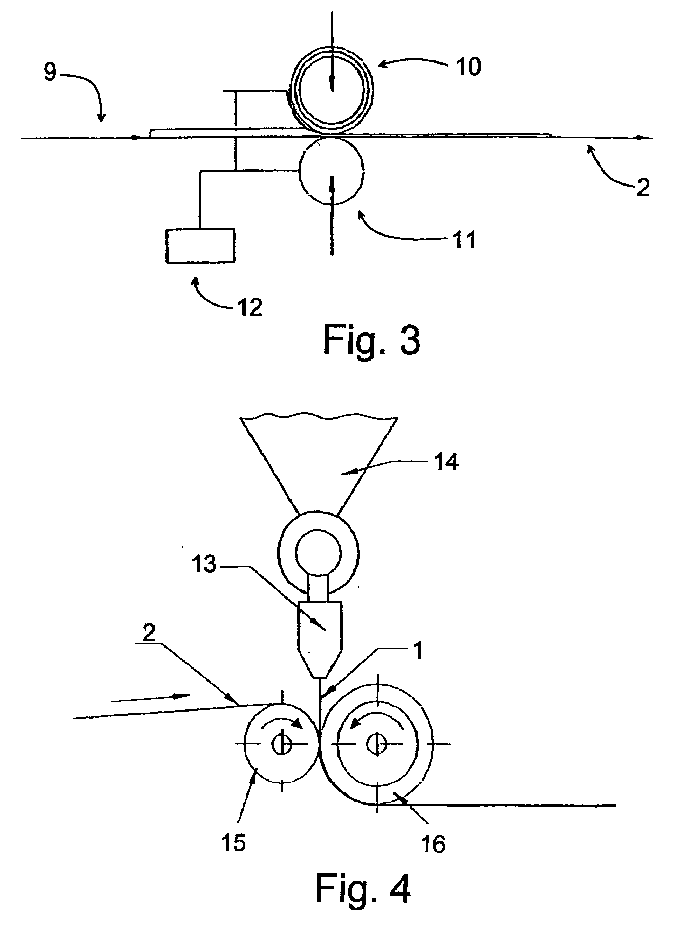

The fibre to be used is preferably polypropylene staple fibre having a length of 40 mm and a fineness of 1.7 dtex. The fibre mat is bound thermally by feeding it through a calender according to Fig. 3. The carded fibrous web 9 develops into a non-woven fabric 2 when the fibrous web 9 is fed through an engraved cylinder 10 and a smooth cylinder 11. When the engraved cylinder 10 and the smooth cylinder 11 are pressed together, the non-woven fabric is bound by heat and pressure. The heating of the cylinders 10 and 11 is controlled via a cylinder heating unit 12. After thermal bonding, the non-woven fabric can be subjected to corona treatment to secure better adhesion of the plastic film.

The non-woven fabric is extrusion coated preferably with a polyethylene film preferably having a grammage of 15 g/m². Figure 4 shows an extrusion coating device in which a thermoplastic film 1 is set through a slit nozzle 13 onto the non-woven fabric 2. The plastic material is heated, melted and pumped with an extruder 14. The melt polymer discharged from the nozzle flows as a continuous film between a press cylinder 15 and a cooling cylinder 16 onto the non-woven fabric. The purpose of the cooling cylinder 16 is to cool down the web so that the plastic film becomes solid and the web can be collected on a roll.

The non-woven fabric coated with a plastic film can be treated on the film side with a silicone-based compound so that the product to be packed can be more easily detached from the packing underlayer. Such a use is *e.g.* a sanitary towel whose adhesive surface is attached to the package material and the adhesive surface must maintain its adhesive property also after detachment from the package. The non-woven fabric side is the outer surface of this package.

The package material can also be printed with a known printing method to have either only colour or patterns. The printed side can be the film or the non-woven fabric side, but also two-sided printing is possible. After the printing, the surface of the material is preferably varnished to improve the adhesion of the colour. The varnish is preferably applied by printing.

Package bags or wrappings are manufactured on a line which cuts the material into a fixed size, makes the necessary folds in the material and seams the material for example with heat. To pack the same product, it is possible to use two different bags made of the same package material, if it is desired that each single product is packed separately inside a larger product package. For example, sanitary towels can be packed in such a way that a single towel is wrapped in said silicone-treated package material in such a way that the adhesive surface of the towel is against the silicone-treated film surface and the non-woven fabric forms the outer surface of this package. Tens of single-packed products are typically packed together in a large product package.

It is obvious that the invention is not limited to the advantageous embodiment of the invention used as an example, but it can vary within the scope of the appended claims. The fibrous web can be formed by a known method for manufacturing non-woven fabrics, for example by dry laying, direct laying or wet laying techniques. Dry laying techniques include *e.g.* air laying and carding; direct laying techniques include spin laying, melt blowing and film fibrillation.

Similarly a fibre mat can be bound into a non-woven fabric with a known bonding method, such as thermal bonding, mechanical bonding, or chemical bonding. Depending on the fibre material, various auxiliary agents may be required in the bonding, *e.g.* special bonding fibres, or a bonding agent. To coat the non-woven fabric with a plastic film, it is possible to use various known techniques in addition to extrusion coating, *e.g.* thermal or adhesive lamination.

The fibre material can be either staple or filament fibres, or a combination of these. The raw material for the fibres can be not only polypropylene but also any other fibre suitable for non-woven fabric techniques, such as polyethylene, polyester, viscose, pulp, cotton, or a fibre blend. Moreover, the structure of the fibres may vary; in addition to ordinary fibres, the fibres can be bicomponent fibres formed of two different polymers, or sheath-core type fibres whose properties are different on the surface and in the core *e.g.* in such a way that the sheath part of the fibre melts at a lower temperature than the core of the fibre. Furthermore, the plastic film can be any plastic film; in addition to a polyethylene film, for example a polypropylene film can be used.

## Claims

1. The use of a material, made of at least one nonwoven fabric (2) of a polypropylene, polyethylene, polyester, viscose, pulp, cotton, or a fibre blend raw material manufactured by dry laying, direct laying or wet laying technique and bound by thermal bonding, mechanical bonding or chemical bonding; and of at least one plastic film (1) of a polyethylene or polypropylene raw material and the nonwoven fabric (2) and the plastic film (1) being attached to each other on their interface (4) by extrusion coating, thermal lamination or adhesive lamination so that the nonwoven material is placed on the outer surface of the package as a packaging material for single packages of sanitary towels, adult incontinence pads and diapers.

2. The use of material according to claim 1, wherein the outer surface of the plastic film (1) is treated with silicone-based compound to form a surface treatment (3).

3. The use of material according to claim 1 or 2, wherein the side of the plastic film and/or the side of the nonwoven fabric is printed with a colour or patterns, which is covered with varnish layer.

## Patentansprüche

1. Verwendung eines Materials, hergestellt aus mindestens einem Vliesstoff (2) aus einem Ausgangsmaterial aus Polypropylen, Polyethylen, Polyester, Viskose, Pulpe, Baumwolle oder einem Fasergemisch, hergestellt durch ein Verfahren des trockenen Legens, direkten Legens oder des nassen Legens und gebunden durch thermische Bindung, mechanische Bindung oder chemische Bindung; und aus mindestens einem Kunststofffilm (1) aus einem Polyethylen- oder Polypropylen-Ausgangsmaterial, wobei der Vliesstoff (2) und der Kunststofffilm (1) an ihrer Grenzfläche (4) durch Extrusionsbeschichten, thermisches Laminieren oder Laminieren mit Klebstoff aneinander befestigt sind, so dass das Vliesmaterial an der äußeren Oberfläche der Packung als Packmaterial für Einzelpackungen von Binden, Inkontinenzeinlagen für Erwachsene und Windeln platziert wird.

2. Verwendung von Material gemäß Anspruch 1, wobei die äußere Oberfläche des Kunststofffilms (1) mit einer Verbindung auf Silikonbasis behandelt wird, um eine Oberflächenbehandlung (3) zu bilden.

3. Verwendung von Material gemäß Anspruch 1 oder 2, wobei die Seite des Kunststofffilms und/oder die Seite des Vliesstoffs mit einer Farbe oder Mustern bedruckt ist, welche mit einer Lackschicht bedeckt ist.

## Revendications

1. Utilisation d'un matériau, constitué d'au moins un tissu non tissé (2) d'une matière première à base de polypropylène, polyéthylène, polyester, viscose, pulpe, coton ou de fibres mélangées, fabriqué par une technique à voie sèche, à voie directe ou à voie humide et lié par une liaison thermique, une liaison mécanique ou une liaison chimique ; et d'au moins un film plastique (1) d'une matière première à base de polyéthylène ou de polypropylène et le tissu non tissé (2) et le film plastique (1) étant reliés l'un à l'autre sur leur interface (4) par un revêtement par extrusion, un doublage thermique ou un doublage adhésif de sorte que le matériau non tissé soit placé sur la surface externe de l'emballage en tant que matériau d'emballage pour les emballages simples de serviettes hygiéniques, de serviettes pour incontinence chez l'adulte et de couches.

2. Utilisation d'un matériau selon la revendication 1, dans lequel la surface externe du film plastique (1) est traitée avec un composé à base de silicone pour former un traitement de surface (3).

3. Utilisation d'un matériau selon la revendication 1 ou 2, dans lequel le côté du film plastique et/ou le côté du tissu non tissé est imprimé avec une couleur ou des motifs, recouverts d'une couche de vernis.
